# EUROPEAN PATENT SPECIFICATION

(11) **EP 2 256 765 B1**
(45) Date of publication and mention of the grant of the patent: **21.12.2011**
(21) Application number: 10164052.2
(22) Date of filing: 27.05.2010
(51) Int. Cl.: H01H 1/06, H01H 33/64, F16F 1/04, F16B 21/18

(54) **A switch using a coil shaped contact shoe**
Schalter der einen spulenförmigen Kontaktschuh verwendet
Commutateur utilisant un coussinet de contact en forme de bobine

(30) Priority: 27.05.2009 JP 2009127857
(43) Date of publication of application: 01.12.2010
(73) Proprietor: Kabushiki Kaisha Toshiba, Tokyo (JP)
(72) Inventor: Miwa, Ikuo, Tokyo (JP); Yanaga, Hironori, Tokyo (JP)
(74) Representative: HOFFMANN EITLE

(56) References cited:
- EP-A1- 0 651 172
- WO-A2-02/070891
- WO-A2-2004/074669
- US-A1- 2005 212 218

## Description

### BACKGROUND OF THE INVENTION

### Field of the Invention

The present invention relates to a switch, and more particularly to a switch using a coil shaped contact shoe in a contacting portion, such as a power switch and an earthing switch and so on.

### Description of the Background

In a switch used in a power equipment, a movable side electrode and a fixed side electrode are provided to an internal conductor. And in addition, a movable conductor is provided which is held slidably in the movable electrode, and a portion in which the movable conductor can be inserted freely is provided in the fixed side electrode, so as to perform electric switching. And a lot of fine reed-shaped contact shoes are fixed to either one of a sliding portion between the movable side electrode and the movable conductor and a portion of the fixed side electrode in which the movable conductor is inserted, to ensure electric conduction.

On the other hand, as a connector an example is known in which a coil shaped contact shoe is provided in one of a fixed portion and a movable portion to form a sliding portion. A coil shaped contact shoe is disclosed in which a configuration of a groove to load a coil shaped contact shoe is changed and sliding loads are changed at a linear reciprocating sliding portion in the forward and backward direction, thereby is made difficult to be dropped out of the groove. A weld position of the coil shaped contact shoe is disclosed, where its cross section becomes an ellipse shape when compressed, and in case that its long axis is arranged approximately in parallel with the sliding direction of the movable conductor, the weld portion is arranged at its side face. (Refer to Patent Document 1.)

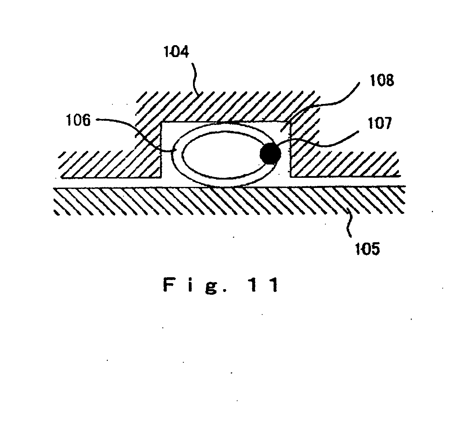

Fig. 11 a sectional view showing a fitted state of a coil shaped contact shoe used in a connector disclosed in Patent Document 1.

A coil shaped contact shoe 106 is of a ring shape formed by jointing both ends of a coil spring, and is loaded in a groove 108 of a fixed portion 104 and is compressed by a movable portion 105. A joint portion 107 is arranged at a side face of the coil shaped contact shoe 106.

### [Patent Document]

Patent Document 1: Japanese Patent Disclosure (Kohyo) JP2006-518090

But, in order to apply a coil shaped contact shoe to a power switch and so on which is required for high reliability, a high current-carrying property capable of flowing a large current, and a high mechanical durability to outstand the cyclic opening and closing operation of the switch, that is the sliding movement of a lot of frequencies by the movable contact shoe, are required. For the reason, aiming mainly the current-carrying property, a copper alloy is used such as beryllium copper and zirconia chromium copper as a material of the coil shaped contact shoe. In addition, in order to manufacture the coil shaped contact shoe, after a wire shaped material is formed in a coil shape, it is necessary to joint its both ends to form a ring shape. In this case, welding is applied as the jointing. In case of copper alloy, when welding is performed, the mechanical strength of the weld portion deteriorates to an approximately half value by the effect of the heat. For the reason, as the mechanical strength is determined by the strength of the weld portion, there was not a coil shaped contact shoe which can outstand opening and closing (sliding) operations of 10,000 time which is regarded as a reliability criterion.

In addition, in case that jointing is performed by welding, as the welded portion expands by a bead, when this portion contacts the current-carrying portion, the coil shaped contact shoe deforms abnormally only at this portion, which became a cause to reduce the current-carrying property.

### SUMMARY OF THE INVENTION

An object of the present invention is to provide a switch with a coil shaped contact shoe which is high in mechanical reliability and with a long life for opening and closing operations of a lot of times, while keeping a stable and high current-carrying property.

According to an aspect of the present invention, there is provided a switch including a movable side contacting portion, a fixed side contacting portion arranged to face the movable side contacting portion, a movable conductor held slidably in the movable side contacting portion which is to be inserted freely in the fixed side contacting portion, a first coil shaped contact shoe loaded in a ring shaped groove formed at an inner circumference of the movable side contacting portion which always contacts with and compressed by the movable conductor, and a second coil shaped contact shoe loaded in a ring shaped groove formed at an inner circumference of the fixed side contacting portion which contacts with and compressed by the movable conductor when the movable conductor is inserted in the fixed side contacting portion. Here each of the first coil shaped contact shoe and the second coil shaped contact shoe is a ring shape formed by jointing both ends of a coil spring at a joint portion, each of the joint portions is located at an apex of an outer circumference of each of the first and second ring shaped contact shoes, and each of the first and second ring shaped contact shoes contacts slope faces formed at both sides of a bottom portion of the ring shaped groove.

According to another aspect of the present invention, there is provided a switch including a movable side contacting portion, a fixed side contacting portion arranged to face the movable side contacting portion, a movable conductor held slidably in the movable side contacting portion which is to be inserted freely in the fixed side contacting portion, a first coil shaped contact shoe loaded in a ring shaped groove formed at an outer circumference of the movable conductor which always contacts with and compressed by the movable side contacting portion, and a second coil shaped contact shoe loaded in another ring shaped groove formed at an outer circumference of the movable conductor which contacts with and compressed by the fixed side contacting portion when the movable conductor is inserted in the fixed side contacting portion. Here each of the first coil shaped contact shoe and the second coil shaped contact shoe is a ring shape formed by jointing both ends of a coil spring at a joint portion, each of the joint portions is located at an apex of an inner circumference of each of the first and second ring shaped contact shoes, and each of the first and second ring shaped contact shoes contacts slope faces formed at both sides of a bottom portion of the ring shaped groove.

According to the present invention, as the coil shaped contact shoe with the joint portion jointing the both ends of the coil spring at an apex of the outer circumference is arranged to contact the slope faces formed at the both sides of the bottom portion of the ring shaped groove, the stress becomes small when the joint portion is compressed, so that the durability can be raised. Accordingly, a switch with a coil shaped contact shoe is realized which is high in mechanical reliability and with a long life for opening and closing operations of a lot of times, while keeping a stable and high current-carrying property.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
Fig. 1 is a sectional view showing a switch using a coil shaped contact shoe in an opened state according to a first embodiment of the present invention;
Fig. 2 is a sectional view showing the switch using the coil shaped contact shoe in a closed state according to the first embodiment;
Fig. 3 is a sectional view showing a jointed state of the coil shaped contact shoe according to the first embodiment;
Fig. 4 is a sectional view showing a fitted state of the coil shaped contact shoe according to the first embodiment;
Figs. 5A and 5B are sectional views, each showing a joint portion of a coil shaped contact shoe, in which Fig. 5A shows the joint portion of the present embodiments, and Fig. 5B is a sectional view for reference;
Fig. 6 is a graph showing cyclic fatigue strength test results with respect to the coil shaped contact shoes of the present embodiments and a conventional coil shaped contact shoe;
Fig. 7 is a sectional view showing a switch using a coil shaped contact shoe in an opened state according to a second embodiment of the present invention;
Fig. 8 is a sectional view showing the switch using the coil shaped contact shoe in a closed state according to the second embodiment;
Fig. 9 is a sectional view showing a jointed state of the coil shaped contact shoe according to the second embodiment;
Fig. 10 is a sectional view showing a fitted state of the coil shaped contact shoe according to the second embodiment; and
Fig. 11 is a sectional view showing a fitted state of a coil shaped contact shoe used in a connector according to a conventional technique.

### DETAILED DESCRIPTION OF THE INVENTION

Referring now to the drawings, wherein like reference numerals designate identical or corresponding parts throughout the several views, the embodiments of this invention will be described below.

### (First Embodiment)

Hereinafter, a first embodiment of the present invention will be described specifically with reference to the drawings.

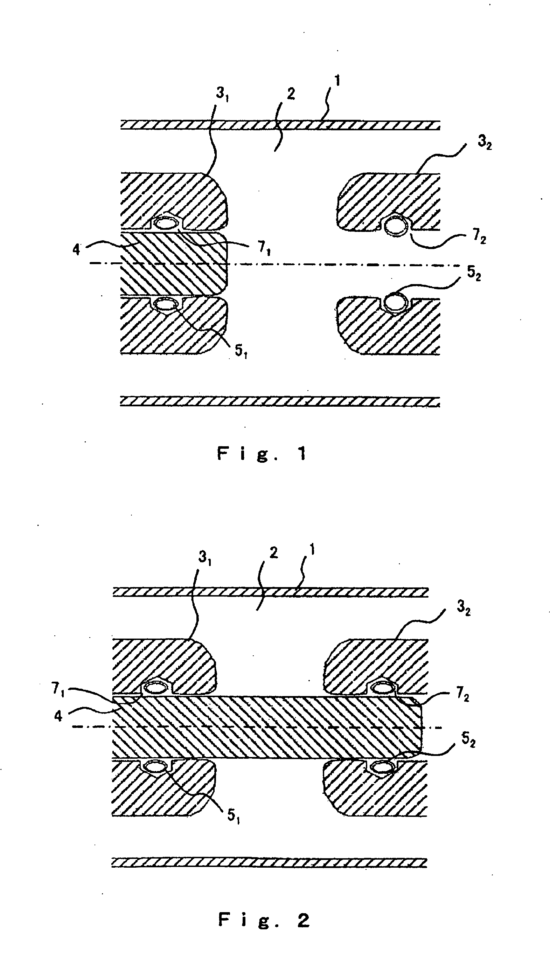

Fig. 1 is a sectional view showing a switch using coil shaped contact shoes according to the first embodiment in an opened state.

SF₆ gas of 0.4 ~ 0.6 MPa is filled in a metal container 1 of the switch so as to ensure electric insulation. In the inside of the metal container 1, a movable side contacting portion 3₁ and a fixed side contacting portion 3₂ are arranged facing to each other with a predetermined interval to form an electrodes portion (a switch contact portion). And at the movable side electrode portion 3₁ constituting one electrode of the electrodes portion, a cylindrical movable conductor 4 is held slidably. At the fixed side electrode portion 3₂ constituting the other electrode of the electrodes portion, a cylindrical hollow is provided so as to insert the movable conductor 4. A first coil shaped contact shoe 5₁ and a second coil shaped contact shoe 5₂, each of which is of a ring shape and contacts an outer circumference face of the movable conductor 4, are fitted to the movable side contacting portion 3₁ and the fixed side contacting portion 3₂, respectively.

Fig. 2 is a sectional view showing the switch using the coil shaped contact shoes according to the present embodiment in a closed state.

The movable conductor 4 is inserted in a cylindrical hollow of the fixed side contacting portion 3₂ by a driving mechanism not shown. In this time, the second coil shaped contact shoe 5₂ fitted to the fixed side contacting portion 3₂ is compressed to extend from the inside.

In such a state, a current flows from the movable side contacting portion 3₁ to the movable electrode 4 via the first coil shaped contact shoe 5₁, and then flows from the movable conductor 4 to the fixed side contacting portion 3₂ via the second coil shaped contact shoe 5₂ so that the closed state of the switch is ensured.

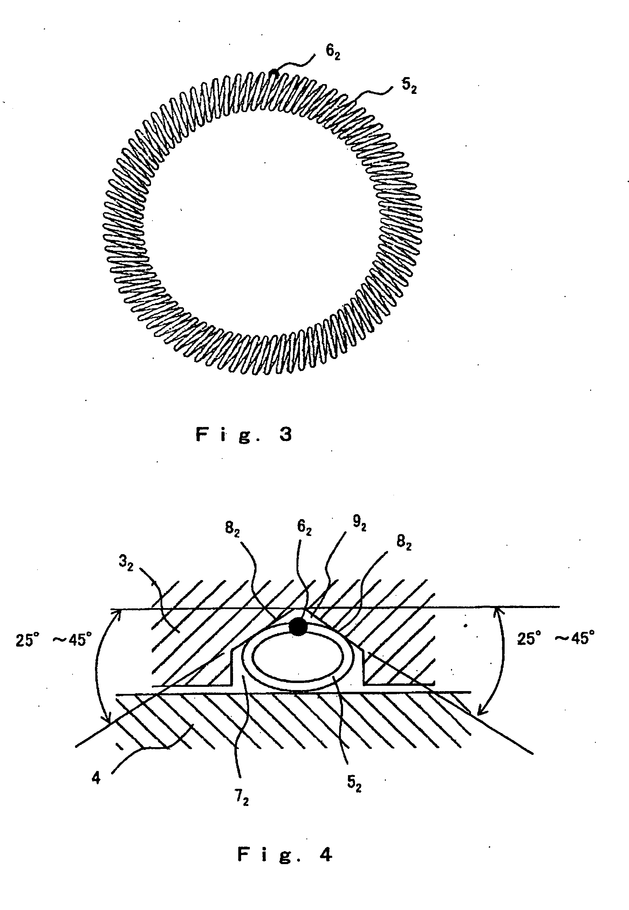

Fig. 3 is a sectional view showing a single body of the coil shaped contact shoe in the present embodiment. Fig. 4 is a sectional view showing in detail a fitted state of the coil shaped contact shoe in the present embodiment.

Here, Fig. 3 and Fig. 4 show the second coil shaped contact shoe 5₂ as an example of the coil shaped contact shoe which deforms when the movable conductor 4 is inserted.

As shown in Fig. 3, the second coil shaped contact shoe 5₂ forms a ring shape by jointing both ends of a wire shaped coil spring, and is jointed so that a joint portion 6₂ is located at an apex of an outer circumference of the second coil shaped contact shoe 5₂.

In Fig. 4, the second coil shaped contact shoe 5₂ is fitted in a ring shaped groove 7₂ formed at an inner circumference of the hollow of the fixed side contacting portion 3₂ in which the movable conductor 4 is inserted. The second coil shaped contact shoe 5₂ is compressed by the movable conductor 4 from the inside, and a cross section of the second coil shaped contact shoe 5₂ projected on a face perpendicular in the circumference direction becomes a shape close to an ellipse from a natural circular shape as shown in Fig. 4. However, as the second coil shaped contact shoe 5₂ is of a coil shape (spiral shape) as described above, an actual deformation process becomes more complicated. That is, with respect to the deformation of the second coil shaped contact shoe 5₂ in a direction perpendicular to the movement of the movable conductor 4, as the deformation is absorbed by that the coil declines more in the circumference direction than the natural state, the stress received by wire material composing the actual coil shaped contact shoe is not different from the natural state. But the deformation in the direction parallel with the movement of the movable conductor 4 is absorbed by the elastic deformation of the wire material, so that the stress becomes large. That is, at the above-described cross section, as the stress received by a side portion (at a portion with a small curvature) by the deformation becomes maximum, and the stress received by the apex (at a portion with a large curvature) of the outer circumference becomes minimum. So that the joint portion 6₂ which is of a low mechanical strength is set to the apex of the outer circumference (a side which the movable conductor 4 does not slide with) of the second coil shaped contact shoe 5₂.

The groove 7₂ is constructed so that the second coil shaped contact shoe 5₂ contacts two slope faces 8₂ provided at the bottom portion. An angle between each of the slope faces 8₂ and the sliding direction of the movable conductor 4 is set to not less than 25° and not more than 45°. By setting the angle as described above, the second coil shaped contact shoe 5₂ can be prevented from twisting (rotating) and a friction force acting on the second coil shaped contact shoe 5₂ from the slope faces 8₂ can be maintained. By this, the twist of the second coil shaped contact shoe 5₂ can be reduced, and a long axis of the ellipse in the cross section is kept approximately in parallel with a center of axle that is the sliding direction of the movable conductor 4.

In addition, by forming a dent 9₂ at the bottom portion of the groove 7₂, contacting the bottom portion with a bloat of the joint portion 6₂ can be avoided. The joint portion 6₂ is kept at the apex of the outer circumference of the second coil shaped contact shoe 5₂. That is, the joint portion 6₂ is located at an approximately intermediate point of two contact points where the second coil shaped contact shoe 5₂ contacts the slope faces 8₂ of the ring shaped groove 7₂.

In addition, Fig. 3 and Fig. 4 show the second coil shaped contact shoe 5₂ which deforms when the movable conductor 4 is inserted, but with respect to the first coil shaped contact shoe 5₁ which is always compressed by the movable conductor 4 from the inside, the jointing state and the fitting state thereof are the same as described above. In addition, in each of the movable side contacting portion 3₁ and the fixed side contacting portion 3₂, two or more grooves may be provided in each of which the coil shaped contact shoe is loaded.

The coil shaped contact shoe is a coil spring made by forming a metallic wire in a coil shape and end portions of the metallic wire are jointed at an apex of the outer circumference. With respect to metal material used for the metallic wire, copper alloy with high electric conductivity and high mechanical strength is used. There is zirconia chromium copper as an example of copper alloy, and its electric conductivity is not less the 70% and the tension strength is not less than 620 MPa. A wire diameter of the metallic wire is from about 0.5 mm to about 2 mm, and jointing is performed by laser welding or resistance welding.

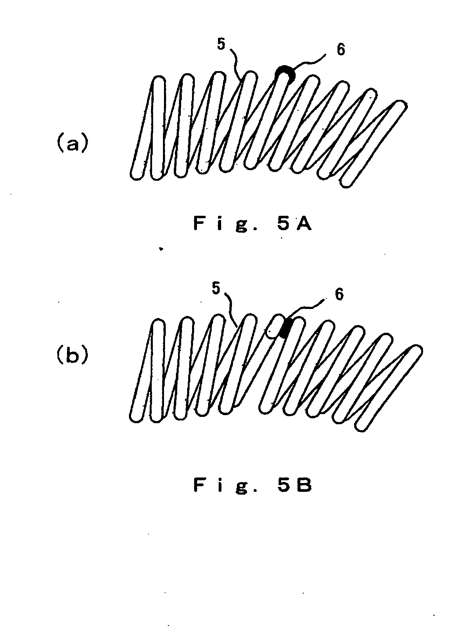

Figs. 5A and 5B are sectional views each showing a joint portion of a coil shaped contact shoe. Fig. 5A is a sectional view showing a joint portion according to the present embodiment, and Fig. 5B is a reference sectional view. When a metallic wire is jointed while lapping both ends as shown in Fig. 5B, the stiffness property of the joint portion 6 becomes larger than those of the other portions, and in addition an interval at of the joint portion 6 becomes larger. For the reason, when a coil shaped contact shoe 5 is compressed, the deformation becomes uneven throughout the coil shaped contact shoe 5 and the contact pressure with the movable conductor 4 becomes uneven, so that the current-carrying property deteriorates. On the other hand, in the coil shaped contact shoe 5 according to the present embodiment which is made by forming metallic wire in a coil shape and in which end portions of the metallic wire are heading jointed as shown in Fig. 5A, the configuration at the joint portion 6 becomes the same as at the other portions. Accordingly, when the coil shaped contact shoe 5 is compressed, deforms evenly including the joint portion 6, so that the current-carrying property can be stabilized.

Hereinafter, an operation and effect of the present embodiment will be described.

In the electrodes portion of the switch using the coil shaped contact shoes according to the present embodiment in the opened state shown in Fig. 1, the movable conductor 4 is stored in the movable side contacting portion 3₁ which is the movable side conductor. The movable conductor 4 is driven linearly toward the fixed side contacting portion 3₂ which is the fixed side conductor by an external driving force, and is inserted in the cylindrical hollow provided at the inner circumference side of the fixed side contacting portion 3₂ thereby to become in the state shown in Fig. 2. When the movable conductor 4 is inserted, it is made possible that a current flows between the movable side contacting portion 3₁ which is the movable side conductor and the fixed side contacting portion 3₂ which is the fixed side conductor. That is, the current flows from the movable side contacting portion 3₁ to the movable conductor 4 via the first coil shaped contact shoe 5₁, and then flows from the movable conductor 4 to the fixed side contacting portion 3₂ via the second coil shaped contact shoe 5₂.

When the movable conductor 4 is inserted, the first and second coil shaped contact shoes 5₁ and 5₂ are compressed and extended from the inside, and become in compressed states by 10 % ∼ 30 % in a space between the movable side contacting portion 3₁ and in a space between the fixed side contacting portions 3₂, respectively. With respect to the compressed state of the first coil shaped contact shoe 5₁ fitted in the movable side contacting portion 3₁, there is almost no difference between in the opened state and in the closed state of the movable conductor 4. But, with respect to the second coil shaped contact shoe 5₂ fitted in the fixed side contacting portion 3₂, though the compression rate in the opened state is 0 % of almost a free state, the compression rate in the closed state becomes 10 % ∼ 30 % because the movable conductor 4 is inserted. Every time the switch is opened and closed, the second coil shaped contact shoe 5₂ cycles the compression rate 0 % in the opened state and the compression rate 10 % ∼ 30 % in the closed state, so that the stress generates cyclically inside the second coil shaped contact shoe 5₂.

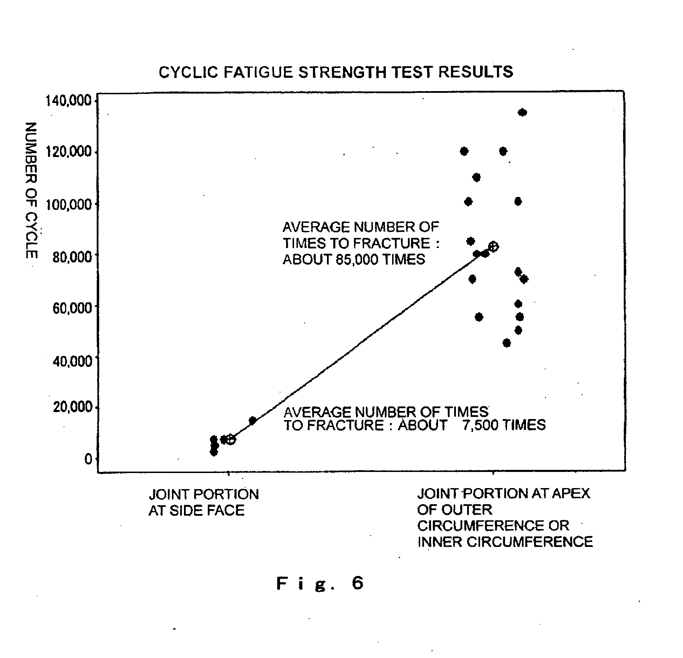

Fig. 6 is a graph showing cyclic fatigue strength test results of the coil shaped contact shoe of the present embodiment and a conventional coil shaped contact shoe.

With respect to specific test contents, the fatigue strength test results are shown in case that joint positions of the coil shaped contact shoes are changed. Here, for each case, a cyclic loading test is performed by cycling that the compression rate is increased from 0 % to 30 % and then is gotten to original 0%, and the number of test times is obtained till the joint portion fractures. Though there is variation in the strength, the coil shaped contact shoe with the conventional construction that the joint portion is located at the side face shown in Fig. 11 fractured at an average of 7,500 times. On the other hand, the coil shaped contact shoe of the present embodiment that the joint portion is located at the apex of the outer circumference or that of a second embodiment described later that the joint portion is located at the apex of the inner circumference fractures at an average of 85,000 times. So that, a life can be extended up to about 10 times, and the durability can be increased.

As the coil shaped contact shoe contacts both slope faces of the bottom portion of the groove, in both cases that the movable conductor moves for the closing state and moves for the opened state, the twist of the coil shaped contact shoe in the sliding direction is small so that the stable contact resistance can be obtained.

And as the long axis of the ellipse shape at the cross section perpendicular to the circumference direction of the coil shaped contact shoe is approximately in parallel with the sliding direction of the movable conductor 4, a large contact pressure can be obtained. And at the same time, in case of the reciprocating movement of the movable conductor 4, that is, in both cases that the movable conductor 4 moves for the closing state and moves for the opened state, the sliding loads (driving forces required for reciprocating movement of the movable conductor 4) can be made the same.

In addition, in a switch where each of the grooves of the movable side contacting portion 3₁ and the fixed side contacting portion 3₂ for loading the coil shaped contact shoe is composed of a simple concave shape and is provided with a flat bottom portion, in case that a joint portion is located at an apex of an outer circumference, the bottom portion contacts the slightly protruding joint portion. As a result, the deformation of whole the coil shaped contact shoe becomes uneven, and the current-carrying property may be reduced. In this case, the outer side of the joint portion of the coil shaped contact shoe may be made flat by a grinder and so on. But this is not sufficient to avoid that the joint portion contacts the bottom portion and the unnecessary stress is loaded on the coil shaped contact shoe by the grinder and so on, so that the strength may be reduced. For this, in the switch as in the present embodiment where the bottom portion of the groove is dented in V-shape, current-carrying can be made by avoiding the contact with the bloat of the joint portion, so that the contact resistance can be suppressed lower and the current-carrying property can be ensured more stable.

### (Second Embodiment)

Hereinafter, a second embodiment of the present invention will be described specifically with reference to the drawings. The same reference numeral is given for the same construction as in the first embodiment, and the duplicated description thereof is omitted.

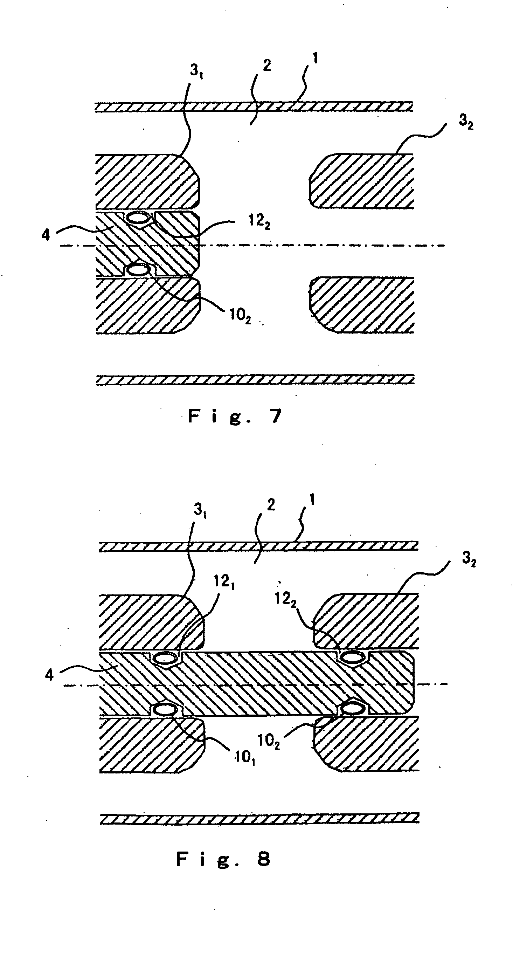

Fig. 7 is a sectional view showing a switch using coil shaped contact shoes according to the second embodiment in an opened state.

The movable side contacting portion 3₁ which holds slidably the cylindrical movable conductor 4 and the fixed side contacting portion 3₂ with the hollow in which the movable conductor 4 is to be inserted are arranged facing to each other with the predetermined interval to form the electrodes portion (the switch contact portion).

Fig. 8 is a sectional view showing the switch using the coil shaped contact shoes according to the present embodiment in a closed state, and shows a state that the movable conductor 4 is inserted in the fixed side contacting portion 3₂. A first coil shaped contact shoe 10₁ to contact with the movable side contacting portion 3₁ and a second coil shaped contact shoe 10₂ to contact with the fixed side contacting portion 3₂ are fitted to the movable conductor 4. The movable conductor 4 is inserted in the cylindrical hollow provided at the inner circumference of the fixed side contacting portion 3₂ by a driving mechanism not shown, and the second coil shaped contact shoe 10₂ fitted to the fixed side contacting portion 3₂ is compressed.

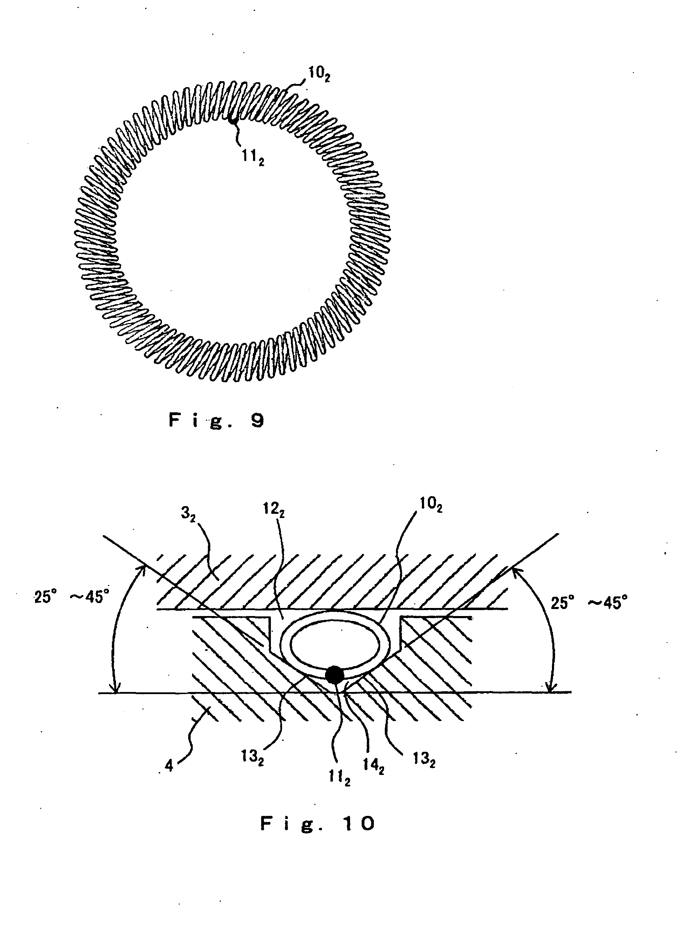

Fig. 9 is a sectional view showing a single body of the coil shaped contact shoe in the present embodiment. Fig. 10 is a sectional view showing in detail a fitted state of the coil shaped contact shoe in the present embodiment.

Here, Fig. 9 and Fig. 10 show with respect to the second coil shaped contact shoe 10₂ as an example of the coil shaped contact shoe.

As shown in Fig. 9, the second coil shaped contact shoe 102 forms a ring shape by jointing both ends of a linear coil spring, and is jointed so that a joint portion 11₂ is located at an apex of the inner circumference of the coil shaped contact shoe 10₂.

In Fig. 10, the second coil shaped contact shoe 10₂ is fitted in a ring shaped groove 12₂ formed at the outer circumference of the movable conductor 4. The second coil shaped contact shoe 10₂ is compressed by the fixed side contacting portion 3₂ from the outside, and the cross section of the second coil shaped contact shoe 10₂ projected to a face perpendicular in the circumference direction becomes a shape close to an ellipse from a natural circular shape as shown in Fig. 10. However, as the coil shaped contact shoe 10₂ is of a coil shape (spiral shape) as described above, an actual deformation process becomes more complicated. That is, in the deformation in a direction perpendicular to the movement of the movable conductor 4, as the deformation is absorbed by that the coil declines more in the circumference direction than the natural state, the stress received by the wire material composing the actual coil shaped contact shoe is not different from the natural state. But the deformation in the direction parallel with the movement of the movable conductor 4 is absorbed by the elastic deformation of the wire material, so that the stress becomes large. That is, at the above-described cross section, as the stress received by a side portion (at a portion with a small curvature) by the deformation becomes maximum, and the stress received by the apex (at a portion with a large curvature) of the inner circumference becomes minimum, the joint portion 11₂ which is of a low mechanical strength is set to the apex of the inner circumference (a side without the sliding of the movable conductor 4) of the second coil shaped contact shoe 10₂.

The groove 12₂ contacts the second coil shaped contact shoe 10₂ at two slope faces 13₂ provided at a bottom portion. An angle between each of the slope faces 13₂ and the sliding direction of the movable conductor 4 is set to not less than 25° and not more than 45°. By setting the angle as described above, the second coil shaped contact shoe 10₂ can be prevented from twisting (rotating) and a friction force acting on the second coil shaped contact shoe 10₂ from the slope faces 13₂ can be maintained. By this, the twist of the second coil shaped contact shoe 10₂ can be reduced, and a long axis of the ellipse in the cross section is kept approximately in parallel with a center of axle that is the sliding direction of the movable conductor 4.

In addition, Fig. 9 and Fig. 10 show the second coil shaped contact shoe 10₂ which is deformed when the movable conductor 4 is inserted, but with respect to the first coil shaped contact shoe 10₁ which is always compressed by the movable conductor 4 from the outside, the joint state and the fitted state thereof are the same as described above.

The point that a dent 14₂ is formed at the bottom portion of the ring shaped groove 12₂ to load the coil shaped conduct shoe 10₂ provided in the movable conductor 4 is the same as in the first embodiment. That is, the point that the joint portion 11₂ is located at an approximately intermediate point of two contact points where the coil shaped contact shoe 10₂ contacts the slope faces 13₂ of the ring shaped groove 12₂ is the same as in the first embodiment.

The point that the coil shaped contact shoe is made of a coil spring made by forming metallic wire in a coil shape and the end portions of the metallic wire are heading jointed is the same as in the first embodiment.

The operation and effect of the present embodiment are the same as in the first embodiment. Hereinafter, durability of the coil shaped contact shoe will be described.

At the electrodes portion of the switch using the coil shaped contact shoes of the present embodiment in the opened state shown in Fig. 7, the movable conductor 4 is stored in the movable side contacting portion 3₁ which is the movable side conductor. The movable conductor 4 is driven linearly toward the fixed side contacting portion 3₂ which is the fixed side conductor by the driving force from the outside, and is inserted in the cylindrical hollow provided at the inner circumference side of the fixed side contacting portion 3₂ and becomes in the state shown in Fig. 8. When the movable conductor 4 is inserted, it can be made possible that a current can flow between the movable side contacting portion 3₁ which is the movable side conductor and the fixed side contacting portion 3₂ which is the fixed side conductor. That is, the current flows from the movable side contacting portion 3₁ to the movable conductor 4 via the coil shaped contact shoe 10₁ and then flows from the movable conductor 4 to the fixed side contacting portion 3₂ via the second coil shaped contact shoe 10₂.

When the movable conductor 4 is inserted, the first and second coil shaped contact shoes 10₁ and 10₂ are compressed from the outside by the movable side contacting portion 3₁ and the fixed side contacting portion 3₂, and become at the compressed states by 10 % ∼ 30 % in the spaces between the movable conductor 4, respectively. With respect to the compressed state of the first coil shaped contact shoe 10₁ out of the coil shaped contact shoes 10₁, 10₂ fitted in the movable conductor 4, there is almost no difference between in the opened state and in the closed state of the movable conductor 4. But, with respect to the second coil shaped contact shoe 10_{2,} in a transition process from the opened state to the closed state, the second coil shaped contact shoe 10₂ becomes in an open state once from a time of sneaking out from the movable side contacting portion 3₁ to a time of being inserted in the fixed side contacting portion 3₂, and the compression rate becomes 0 %. Then, when the second coil shaped contact shoe 10₂ is inserted in the fixed side contacting portion 3₂, as the second coil shaped contact shoe 10₂ is compressed by the fixed side contacting portion 3₂, the compression rate becomes 10 % ∼ 30 %. Every time the switch is opened and closed, the second coil shaped contact shoe 10₂ cycles the compression rate 0 % of the opened state and the compression rate 10 % ~ 30 % of the closed state, so that the stress generates cyclically inside the second coil shaped contact shoe 10₂.

As shown in Fig. 5, with respect to the coil shaped contact shoes according to the present embodiment, the life for the opening and closing can be elongated by about 11 times, and the durability can be increased, in the same way as the coil shaped contact shoes according to the first embodiment.

Obviously, numerous modifications and variations of the present invention are possible in light of the above teachings. It is therefore to be understood that within the scope of the appended claims, the invention may be practiced otherwise than as specifically described herein.

## Claims

1. A switch, comprising:
a movable side contacting portion (3₁);
a fixed side contacting portion (3₂) arranged to face the movable side contacting portion (3₁) ;
a movable conductor (4) held slidably in the movable side contacting portion (3₁) which is to be inserted freely in the fixed side contacting portion (3₂) ;
a first coil shaped contact shoe (5₁) loaded in a ring shaped groove (7₁) formed at an inner circumference of the movable side contacting portion (3₁) which always contacts with and compressed by the movable conductor (4) ; and
a second coil shaped contact shoe (5₂) loaded in a ring shaped groove (7₂) formed at an inner circumference of the fixed side contacting portion (3₂) which contacts with and compressed by the movable conductor (4) when the movable conductor (4) is inserted in the fixed side contacting portion (3₂) ;
wherein each of the first coil shaped contact shoe (5₁) and the second coil shaped contact shoe (5₂) is a ring shape formed by jointing both ends of a coil spring at a joint portion (6₂), **characterized in that**
each of the joint portions (6₂) is located at an apex of an outer circumference of each of the first and second ring shaped contact shoes (5₁, 5₂), and
each of the first and second ring shaped contact shoes (5₁, 5₂) contacts slope faces (8₂) formed at both sides of a bottom portion of the ring shaped groove (7₁, 7₂).

2. A switch, comprising:
a movable side contacting portion (3₁);
a fixed side contacting portion (3₂) arranged to face the movable side contacting portion (3) ;
a movable conductor (4) held slidably in the movable side contacting portion (3₁) which is to be inserted freely in the fixed side contacting portion (3₂) ;
a first coil shaped contact shoe (10₁) loaded in a ring shaped groove (12₁) formed at an outer circumference of the movable conductor (4) which always contacts with and compressed by the movable side contacting portion (10₁) ; and
a second coil shaped contact shoe (10₂) loaded in another ring shaped groove (12₂) formed at an outer circumference of the movable conductor (4) which contacts with and compressed by the fixed side contacting portion (3₂) when the movable conductor (4) is inserted in the fixed side contacting portion (3₂) ;
wherein each of the first coil shaped contact shoe (10₁) and the second coil shaped contact shoe (10₂) is a ring shape formed by jointing both ends of a coil spring at a joint portion (11₂), **characterized in that**
each of the joint portions (11₂) is located at an apex of an inner circumference of each of the first and second ring shaped contact shoes (10₁, 10₂) and
each of the first and second ring shaped contact shoes (10₁, 10₂) contacts slope faces (13₂) formed at both sides of a bottom portion of the ring shaped groove (12₁, 12₂).

3. The switch as recited in Claim 1 or Claim 2, wherein:
each of the slope faces (8₂, 13₂) is arranged at an angle of 25° ∼ 45° for a sliding direction of the movable conductor.

4. The switch as recited in Claim 1 or Claim 2, wherein:
the joint portion (6₂, 11₂) does not contact the bottom portion of the ring shaped groove (7₁, 7₂, 12₁, 12₂) by a dent (9₂, 14₂) formed at the bottom portion of the ring shaped groove (7₁, 7₂, 12₁, 12₂).

5. The switch as recited in Claim 1 or Claim 2, wherein:
the joint portion (6₂, 11₂) is a joint portion formed by heading welding.

6. The switch as recited in Claim 1 or Claim 2, wherein:
the joint portion (6₂, 11₂) is at an approximately intermediate point of two contact points of the two slope faces (8₂, 13₂) at which each of the first and second coil shaped contact shoes (5₁, 52, 10₁, 10₂) contacts the ring shaped groove (7₁, 7₂, 12₁, 12₂).

7. The switch as recited in Claim 5, wherein:
the joint portion (6₂, 11₂) is formed by laser welding or resistance welding.

8. The switch as recited in Claim 1 or Claim 2, wherein:
the coil spring is formed by forming a metallic wire in a coil shape; and
a material of the metallic wire includes a copper alloy.

9. The switch as recited in Claim 8, wherein:
the copper alloy includes zirconia chromium copper.

10. The switch as recited in Claim 1 or Claim 2, wherein:
the first coil shaped contact shoe (5₁, 10₁) is composed of a plurality of first coil shaped contact shoes (5₁, 10₁) ; and
the second coil shaped contact shoe (5₂, 10₂) is composed of a plurality of second coil shaped contact shoes (5₂, 10₂).

## Patentansprüche

1. Schalter mit:
einem bewegbaren Seitenkontaktabschnitt (3₁);
einem festen Seitenkontaktabschnitt (3₂), der so angeordnet ist, dass er dem bewegbaren Seitenkontaktabschnitt (3₁) gegenüberliegt;
einem bewegbaren Leiter (4), der gleitbar in dem bewegbaren Seitenkontaktabschnitt (3₁) gehalten ist und der frei in den festen Seitenkontaktabschnitt (3₂) einsetzbar ist;
einem ersten spulenförmigen Kontaktschuh (5₁), der in eine ringförmige Auskehlung (7₁) geladen ist, die an einem inneren Umfang des bewegbaren Seitenkontaktabschnitts (3₁) ausgebildet ist, und der immer in Kontakt mit dem bewegbaren Leiter (4) ist und durch den bewegbaren Leiter (4) komprimiert wird; und
einem zweiten spulenförmigen Kontaktschuh (5₂), der in eine ringförmige Auskehlung (7₂) geladen ist, die an einem inneren Umfang des festen Seitenkontaktabschnitts (3₂) ausgebildet ist, und der in Kontakt mit dem bewegbaren Leiter (4) ist und durch den bewegbaren Leiter (4) komprimiert wird, wenn der bewegbare Leiter (4) in den festen Seitenkontaktabschnitt (3₂) eingesetzt ist;
wobei jeder des ersten spulenförmigen Kontaktschuhs (5₁) und des zweiten spulenförmigen Kontaktschuhs (5₂) eine Ringform ist, die durch Verbinden beider Enden einer Spulenfeder an einem Verbindungsabschnitt (6₂) ausgebildet ist, **dadurch gekennzeichnet, dass**
jeder der Verbindungsabschnitte (6₂) an einem Scheitel eines äußeren Umfangs jedes der ersten und zweiten ringförmigen Kontaktschuhe (5₁, 5₂) angeordnet ist und
jeder der ersten und zweiten ringförmigen Kontaktschuhe (5₁, 5₂) in Kontakt mit Neigungsflächen (8₂) ist, die an beiden Seiten eines Bodenabschnitts der ringförmigen Auskehlung (7₁, 7₂) ausgebildet sind.

2. Schalter mit:
einem bewegbaren Seitenkontaktabschnitt (3₁);
einem festen Seitenkontaktabschnitt (3₂), der so angeordnet ist, dass er dem bewegbaren Seitenkontaktabschnitt (3₁) gegenüberliegt;
einem bewegbaren Leiter (4), der gleitbar in dem bewegbaren Seitenkontaktabschnitt (3₁) gehalten ist und der frei in den festen Seitenkontaktabschnitt (3₂) einsetzbar ist;
einem ersten spulenförmigen Kontaktschuh (10₁), der in eine ringförmige Auskehlung (12₁) geladen ist, die an einem äußeren Umfang des bewegbaren Leiters (4) ausgebildet ist, und der immer in Kontakt mit dem bewegbaren Seitenkontaktabschnitt (10₁) ist und durch den bewegbaren Seitenkontaktabschnitt (10₁) komprimiert wird; und
einem zweiten spulenförmigen Kontaktschuh (10₂), der in eine andere ringförmige Auskehlung (12₂) geladen ist, die an einem äußeren Umfang des bewegbaren Leiters (4) ausgebildet ist, und der in Kontakt mit dem festen Seitenkontaktabschnitt (3₂) ist und durch den festen Seitenkontaktabschnitt (3₂) komprimiert wird, wenn der bewegbare Leiter (4) in den festen Seitenkontaktabschnitt (3₂) eingesetzt ist;
wobei jeder des ersten spulenförmigen Kontaktschuhs (10₁) und des zweiten spulenförmigen Kontaktschuhs (10₂) eine Ringform ist, die durch Verbinden beider Enden einer Spulenfeder an einem Verbindungsabschnitt (11₂) ausgebildet ist, **dadurch gekennzeichnet, dass**
jeder der Verbindungsabschnitte (11₂) an einem Scheitel eines inneren Umfangs jedes der ersten und zweiten ringförmigen Kontaktschuhe (10₁, 10₂) angeordnet ist und
jeder der ersten und zweiten ringförmigen Kontaktschuhe (10₁, 10₂) in Kontakt mit Neigungsflächen (13₂) ist, die an beiden Seiten eines Bodenabschnitts der ringförmigen Auskehlung (12₁, 12₂) ausgebildet sind.

3. Schalter nach Anspruch 1 oder Anspruch 2, bei dem jede der Neigungsflächen (8₂, 13₂) in einem Winkel von 25° bis 45° für eine Gleitrichtung des bewegbaren Leiters angeordnet ist.

4. Schalter nach Anspruch 1 oder 2, bei dem der Verbindungsabschnitt (6₂, 11₂) nicht in Kontakt mit dem Bodenabschnitt der ringförmigen Auskehlung (7₁, 7₂, 12₁, 12₂) durch eine Kerbe (9₂, 14₂) ist, die an dem Bodenabschnitt der ringförmigen Auskehlung (7₁, 7₂, 12₁, 12₂) ausgebildet ist.

5. Schalter nach Anspruch 1 oder Anspruch 2, bei dem der Verbindungsabschnitt (6₂, 11₂) ein Verbindungsabschnitt ist, der durch Stauchschweißen ausgebildet ist.

6. Schalter nach Anspruch 1 oder Anspruch 2, bei dem der Verbindungsabschnitt (6₂, 11₂) an einem ungefähren Zwischenpunkt von zwei Kontaktpunkten der zwei Neigungsflächen (8₂, 13₂) ist, an dem jeder der ersten und zweiten spulenförmigen Kontaktschuhe (5₁, 5₂, 10₁, 10₂) in Kontakt mit der ringförmigen Auskehlung (7₁, 7₂, 12₁, 12₂) ist.

7. Schalter nach Anspruch 5, bei dem der Verbindungsabschnitt (6₂, 11₂) durch Laserschweißen oder Widerstandsschweißen gebildet ist.

8. Schalter nach Anspruch 1 oder Anspruch 2, bei dem
die Spulenfeder durch Ausbilden eines Metalldrahts in einer Spulenform gebildet ist; und
ein Material des Metalldrahts eine Kupferlegierung aufweist.

9. Schalter nach Anspruch 8, bei dem die Kupferlegierung Zirkonium-Chrom-Kupfer aufweist.

10. Schalter nach Anspruch 1 oder Anspruch 2, bei dem
der erste spulenförmige Kontaktschuh (5₁, 10₁) aus mehreren ersten spulenförmigen Kontaktschuhen (5₁, 10₁) besteht; und
der zweite spulenförmige Kontaktschuh (5₂, 10₂) aus mehreren zweiten spulenförmigen Kontaktschuhen (5₂, 10₂) besteht.

## Revendications

1. Commutateur, comprenant :
une partie de contact latérale mobile (3₁) ;
une partie de contact latérale fixe (3₂) agencée de sorte à faire face à la partie de contact latérale mobile (3₁) ;
un conducteur mobile (4) maintenu de façon coulissante dans la partie de contact latérale mobile (3₁) qui doit être inséré librement dans la partie de contact latérale fixe (3₂) ;
un premier coussinet de contact en forme de bobine (5₁) introduit dans une gorge de forme annulaire (7₁) formée sur une circonférence interne de la partie de contact latérale mobile (3₁) qui est toujours en contact avec le conducteur mobile (4) et comprimé par celui-ci ; et
un second coussinet de contact en forme de bobine (5₂) introduit dans une gorge de forme annulaire (7₂) formée sur la circonférence interne de la partie de contact latérale fixe (3₂) qui est en contact avec le conducteur mobile (4) et comprimé par celui-ci lorsque le conducteur mobile (4) est inséré dans la partie de contact latérale fixe (3₂) ;
dans lequel chacun du premier coussinet de contact en forme de bobine (5₁) et du second coussinet de contact en forme de bobine (5₂) est une forme annulaire formée en joignant les deux extrémités d'un ressort hélicoïdal au niveau d'une partie de joint (6₂), **caractérisé en ce que**
chacune des parties de joint (6₂) se trouve au niveau d'un sommet d'une circonférence externe de chacun des premier et second coussinets de contact de forme annulaire (5₁, 5₂), et
chacun des premier et second coussinets de contact de forme annulaire (5₁, 5₂) est en contact avec les faces inclinées (8₂) formées sur les deux côtés d'une partie de fond de la gorge de forme annulaire (7₁, 7₂).

2. Commutateur, comprenant :
une partie de contact latérale mobile (3₁) ;
une partie de contact latérale fixe (3₂) agencée de sorte à faire face à la partie de contact latérale mobile (3₁) ;
un conducteur mobile (4) maintenu de façon coulissante dans la partie de contact latérale mobile (3₁) qui doit être inséré librement dans la partie de contact latérale fixe (3₂) ;
un premier coussinet de contact en forme de bobine (10₁) introduit dans une gorge de forme annulaire (12₁) formée sur une circonférence externe du conducteur mobile (4) qui est toujours en contact avec la partie de contact latérale mobile (10₁) et comprimé par celle-ci ; et
un second coussinet de contact en forme de bobine (10₂) introduit dans une autre gorge de forme annulaire (12₂) formée sur une circonférence externe du conducteur mobile (4) qui est en contact avec la partie de contact latérale fixe et comprimé par celle-ci lorsque le conducteur mobile (4) est inséré dans la partie de contact latérale fixe (3₂) ;
dans lequel chacun du premier coussinet de contact en forme de bobine (10₁) et du second coussinet de contact en forme de bobine (10₂) est une forme annulaire formée en joignant les deux extrémités d'un ressort hélicoïdal au niveau d'une partie de joint (11₂), **caractérisé en ce que**
chacune des parties de joint (11₂) se trouve au niveau d'un sommet d'une circonférence interne de chacun des premier et second coussinets de contact de forme annulaire (10₁, 10₂), et
chacun des premier et second coussinets de contact de forme annulaire (10₁, 10₂) est en contact avec les faces inclinées (13₂) formées sur les deux côtés d'une partie de fond de la gorge de forme annulaire (12₁, 12₂).

3. Commutateur selon la revendication 1 ou la revendication 2, dans lequel :
chacune des faces inclinées (8_{2,} 13₂) est agencée à un angle de 25° - 45° pour une direction de coulissement du conducteur mobile.

4. Commutateur selon la revendication 1 ou la revendication 2, dans lequel :
la partie de joint (6₂, 11₂) n'est pas en contact avec la partie de fond de la gorge de forme annulaire (7₁, 7₂, 12₁, 12₂) au moyen d'une dent (9₂, 14₂) formée au niveau de la partie de fond de la gorge de forme annulaire (7₁, 7₂, 12₁, 12₂).

5. Commutateur selon la revendication 1 ou la revendication 2, dans lequel :
la partie de joint (6₂, 11₂) est une partie de joint formée au moyen d'un soudage par tête.

6. Commutateur selon la revendication 1 ou la revendication 2, dans lequel :
la partie de joint (6₂, 11₂) se trouve à un point approximativement intermédiaire de deux points de contact des deux faces inclinées (8₂, 13₂) au niveau desquelles chacun des premier et second coussinets de contact en forme de bobine (5_{1,} 5₂, 10₁, 10₂) est en contact avec la gorge de forme annulaire (7₁, 7₂, 12₁, 12₂).

7. Commutateur selon la revendication 5, dans lequel :
la partie de joint (6₂, 11₂) est formée au moyen d'un soudage au laser ou soudage par résistance.

8. Commutateur selon la revendication 1 ou la revendication 2, dans lequel :
le ressort hélicoïdal est formé en façonnant un fil métallique en forme de bobine ; et
un matériau du fil métallique comprend un alliage de cuivre.

9. Commutateur selon la revendication 8, dans lequel :
l'alliage de cuivre comprend du cuivre au zirconium-chrome.

10. Commutateur selon la revendication 1 ou la revendication 2, dans lequel :
le premier coussinet de contact en forme de bobine (5₁, 10₁) est composé d'une pluralité de premiers coussinets de contact en forme de bobine (5₁, 10₁) ; et
le second coussinet de contact en forme de bobine (5₂. 10₂) est composé d'une pluralité de seconds coussinets de contact en forme de bobine (5₂, 10₂).
